# EUROPÄISCHE PATENTANMELDUNG

(11) **EP 0 596 422 A1**
(43) Veröffentlichungstag der Anmeldung: **11.05.1994**
(21) Anmeldenummer: 93117556.6
(22) Anmeldetag: 29.10.1993
(51) Int. Cl.: F16H 35/04

(54) **Ausgleichsgetriebe**

(30) Priorität: 06.11.1992 DE 4237463
(71) Anmelder: Harr, Ewald, D-74193 Schwaigern (DE)
(72) Erfinder: Harr, Ewald, D-74193 Schwaigern (DE)
(74) Vertreter: Patentanwälte Bartels, Held und Partner

(57) **Zusammenfassung**

Bei einem Ausgleichsgetriebe weisen weder die Kupplungseinrichtung (7 bis 12), welche die Abtriebselemente (5) mit einem mittels eines Antriebselementes (3) in Drehung versetzbaren Lagerkörper (1) verbindet, noch die Abtriebselemente (5) einen Zahnkranz auf. Die beiden Abtriebselemente (5) sind mit je einem Verbindungsglied (5') mit exzentrisch zur Drehachse des Abtriebselementes (5) liegender Verbindungsstelle für die Verbindung mit der Kupplungseinrichtung (7 bis 12) versehen. Die Kupplungseinrichtung (7 bis 12) weist ein Kupplungsglied (10, 11, 12) auf, das zwischen den beiden Abtriebselementen (5) um eine zur Drehachse des Lagerkörpers (1) lotrecht verlaufende Achse drehbar im Lagerkörper gelagert ist.

## Beschreibung

Die Erfindung betrifft ein Ausgleichsgetriebe, das die Merkmale des Oberbegriffs des Anspruches 1 aufweist.

Bei den bekannten Ausgleichsgetrieben dieser Art, die vorwiegend in Kraftfahrzeugen zur Drehmomentübertragung auf die angetriebene Achse verwendet werden, sind die beiden Abtriebselemente als Kegelräder ausgebildet, welche mit Ausgleichskegelrädern in Eingriff stehen, die drehbar in dem als Ausgleichsgehäuse ausgebildeten Lagerkörper gelagert sind.

Der Erfindung liegt die Aufgabe zugrunde, ein auf einem anderen Konstruktionsprinzip beruhendes Ausgleichsgetriebe zu schaffen. Diese Aufgabe löst ein Ausgleichsgetriebe mit den Merkmalen des Anspruches 1.

Bei dem erfindungsgemäßen Ausgleichsgetriebe erfolgt die Drehmomentübertragung von der Kupplungseinrichtung auf die beiden Abtriebselemente je in der Art eines Kurbelgetriebes.

Daher weisen weder die Abtriebselemente noch die Kupplungseinrichtung einen Zahnkranz auf. Da auch für die Drehmomentübertragung von dem Lagerkörper auf die Kupplungseinrichtung keine Zahnkränze erforderlich sind, weil die für den Antrieb der Abtriebselemente erforderliche Drehbewegung des Kupplungsgliedes der Kupplungseinrichtung um seine Querachse durch eine Mitnahme mit dem Lagerkörper erreicht werden kann, ist allenfalls ein Zahnrad zur Übertragung des Antriebsdrehmomentes auf den Lagerkörper erforderlich.

Die Ausbildung der Kupplungseinrichtung und insbesondere ihres Kupplungsgliedes ist in verschiedener Weise möglich. Ist das Kupplungsglied im Lagerkörper nicht nur um seine Längsachse drehbar, sondern auch in Richtung seiner Längsachse verschiebbar gelagert, und stehen von dem Kupplungsglied in entgegengesetzten Richtungen zwei Arme ab, deren freies Ende die Form wenigstens einer unvollständigen Kugel hat, dann ist es vorteilhaft, diese Kugeln unter Bildung je eines Kugelgelenkes in einem sphärischen Lagerbett je einer Taumelscheibe zu lagern, die im Abstand vom Zentrum des Lagerbettes mit dem zugeordneten Verbindungsglied in dessen exzentrisch angeordneter Verbindungsstelle um eine zu dessen Drehachse rechtwinklig verlaufende Gelenkachse schwenkbar verbunden sind.

Wenn man, was eine andere Möglichkeit darstellt, die exzentrisch angeordnete Verbindungsstelle der beiden Verbindungsglieder durch je eine zylindrische, parallel zur Drehachse des Verbindungsgliedes verlaufende Lagerfläche bildet, in der eine Kugel des Kupplungsgliedes drehbar und in Richtung der Zylinderachse verschiebbar gelagert ist, dann ist es besonders vorteilhaft, zwischen der Kugel und der zylindrischen Lagerfläche einen Lagerring mit sphärischer Innenfläche und zylindrischer Außenfläche anzuordnen, weil dann die Lagerkräfte nicht auf einen Linienbereich konzentriert sind, sondern auf eine streifenförmige Fläche verteilt sind.

Sehr vorteilhaft ist auch eine Ausbildung dahingehend, daß die exzentrisch angeordneten Verbindungsstellen der Abtriebselemente durch je eine wenigstens unvollständige Kugel gebildet ist und das Kupplungsglied gegen eine Verschiebung in Richtung seiner Drehachse relativ zum Lagerkörper gesichert ist sowie zwei diametral bezüglich der Drehachse angeordnete Ausnehmungen aufweist, mit denen die eine bzw. andere Kugel in einem ein in Richtung der Drehachse des Kupplungsgliedes und der Abtriebselemente verschiebbares Kugelgelenk bildenden Eingriff steht. Auch hierbei ist es zweckmäßig, zwischen der Kugel und den durch die Ausnehmung gebildeten Führungsflächen einen Lagerring mit sphärischer Innenfläche und an den Führungsflächen anliegenden Außenflächen anzuordnen.

Ein besonderer Vorteil des erfindungsgemäßen Ausgleichsgetriebes besteht darin, daß es in einfacher Weise mit einer Bremseinrichtung versehen werden kann, welche dem Ausgleichsgetriebe die Wirkung eines Sperrdifferentials verleiht und bei unterschiedlicher Drehgeschwindigkeit der beiden Abtriebselemente auf das die größere Drehgeschwindigkeit aufweisende Abtriebselement ein Bremsmoment ausübt.

Sofern das Kupplungsglied bei unterschiedlichen Drehzahlen der beiden Abtriebselemente eine in Richtung seiner Längsachse erfolgende translatorische Oszillationsbewegung ausführt, kann man beispielsweise die beiden Endabschnitte des Kupplungsgliedes je als Kolben ausbilden und diese je in einem relativ zum Lagerkörper unbeweglichen Zylinder anordnen. Diese Kolben können ein Fluid, das sich in den beiden Zylindern befindet, durch einen das Kupplungsglied durchdringenden Kanal hindurchpumpen. Die Bremswirkung hängt dabei von dem Energiebedarf ab, der für den Fluidtransport benötigt wird und der um so größer ist, je stärker der Fluidtransport vom einen zum anderen Zylinder gedrosselt wird.

Man kann aber auch die bei unterschiedlichen Drehzahlen der Abtriebsglieder vorhandene Drehbewegung des Kupplungsgliedes um seine Achse für die Aktivierung der Bremseinrichtung nutzen. In diesem Falle kann man einen drehfest mit dem Kupplungsglied verbundenen Drehkolben vorsehen, der in einen am Lagerkörper unbeweglich angeordneten Zylinder eingreift und bei einer um die Drehachse des Kupplungsgliedes oszillierenden Drehbewegung desselben ein Fluid, das sich im Zylinder befindet, durch eine Drosselstrecke hindurch zwischen zwei Zylinderkammern hin- und herpumpt. Die Bremswirkung kann hierbei in einfacher Weise dadurch verändert werden, daß man die Größe des Spaltes zwischen dem Drehkolben und der Innenwand des Zylinders verändert. Ferner kann man die Innenwand des Zylinders so gestalten, daß die Weite des Drosselspaltes von der Mitte des Schwenkbereiches des Drehkolbens zu den beiden Enden des Schwenkbereiches hin abnimmt. Da die Winkelgeschwindigkeit des Drehkolbens in dieser Richtung ebenfalls abnimmt, kann durch eine Verengung des Drosselspaltes die geschwindigkeitsbedingte Abnahme des Bremsmomentes zumindest teilweise durch die Verengung des Drosselspaltes kompensiert werden.

Im folgenden ist die Erfindung an Hand von in der Zeichnung dargestellten Ausführungsbeispielen im einzelnen erläutert. Es zeigen
Fig. 1 einen Längsschnitt eines ersten Ausführungsbeispiels,
Fig. 2 einen Querschnitt des ersten Ausführungsbeispiels in einer anderen Drehstellung der Abtriebselemente,
Fig. 3 einen Längsschnitt entsprechend Fig. 1 eines zweiten Ausführungsbeispiels,
Fig. 4 einen Querschnitt entsprechend Fig. 2 des zweiten Ausführungsbeispiels,
Fig. 5 einen Ausschnitt aus einem Längsschnitt entsprechend Fig. 3 einer Abwandlung des zweiten Ausführungsbeispiels,
Fig. 6 einen Längsschnitt entsprechend Fig. 1 eines dritten Ausführungsbeispiels,
Fig. 7 einen Querschnitt entsprechend Fig. 2 des dritten Ausführungsbeispiels,
Fig. 8 einen Schnitt nach der Linie VIII-VIII der Fig. 6,
Fig. 9 einen Längsschnitt entsprechend Fig. 1 eines vierten Ausführungsbeispiels,
Fig.10 einen Querschnitt entsprechend Fig. 2 des vierten Ausführungsbeispiels,
Fig.11 einen Schnitt nach der Linie XI-XI der Fig. 9,
Fig.12 einen Qurschnitt entsprechend Fig. 7 einer als Sperrdifferential ausgebildeten Abwandlung des dritten Ausführungsbeispiels,
Fig.13 einen Schnitt nach der Linie XIII-XIII der Fig. 12.

Ein Ausgleichsgetriebe, das beispielsweise für den Achsantrieb eines Kraftfahrzeuges verwendbar ist, weist ein gegossenes Gehäuse 1 auf, das aus zwei Hälfte zusammengesetzt ist. Dieses Gehäuse 1 ist um seine Symmetrieachse drehbar mittels zweier Wälzlager 2 in einem nicht dargestellten Getriebegehäuse drehbar gelagert. Ein zur Drehachse des Gehäuses 1 konzentrisch an diesem festgelegtes Tellerrad 3 dient dem Drehantrieb des Gehäuses 1.

In den beiden Lagerbuchsen 4 des Gehäuses 1, die von den Wälzlagern 2 getragen werden, ist drehbar, aber axial unverschiebbar je ein Abtriebselement 5 gelagert. Die beiden gleichachsig angeordneten Abtriebselemente 5, deren Achse mit der Dreh- und Symmetrieachse des Gehäuses 1 fluchtet, sind je mit einer zentralen Sacklochbohrung versehen, welche der Aufnahme und drehfesten Verbindung des Abtriebselementes 5 mit einer nicht dargestellten Abtriebswelle dient. An die gegen das Innere des Gehäuses 1 weisende Stirnseite der beiden gleich ausgebildeten Abtriebselemente 5 ist exzentrisch ein in axialer Richtung abstehender, stabförmiger Vorsprung 5' angeformt, der mit einer Querbohrung versehen ist.

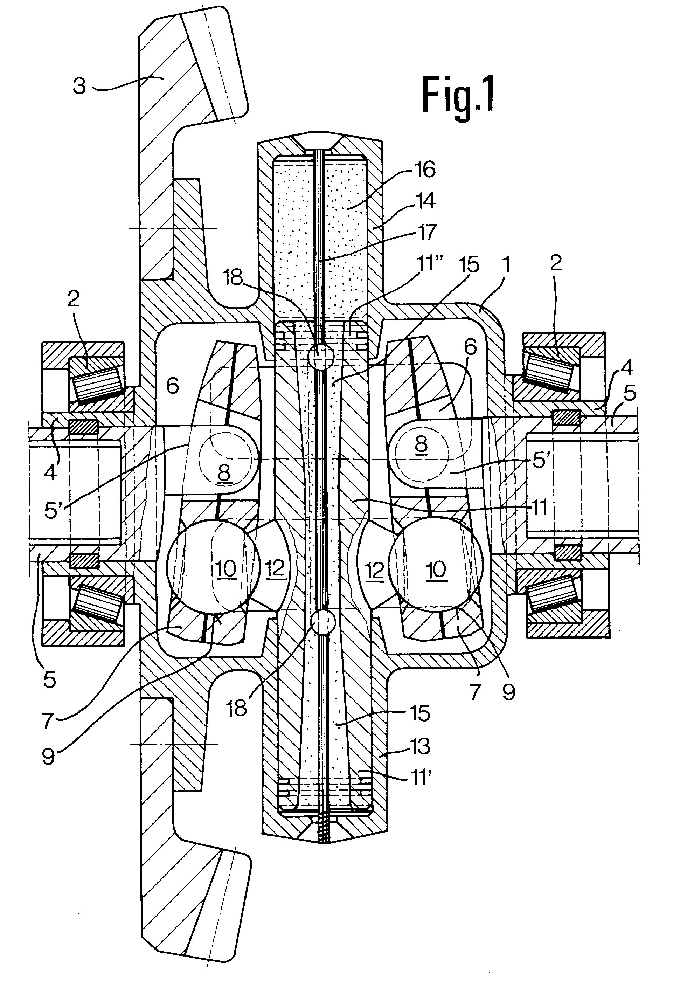

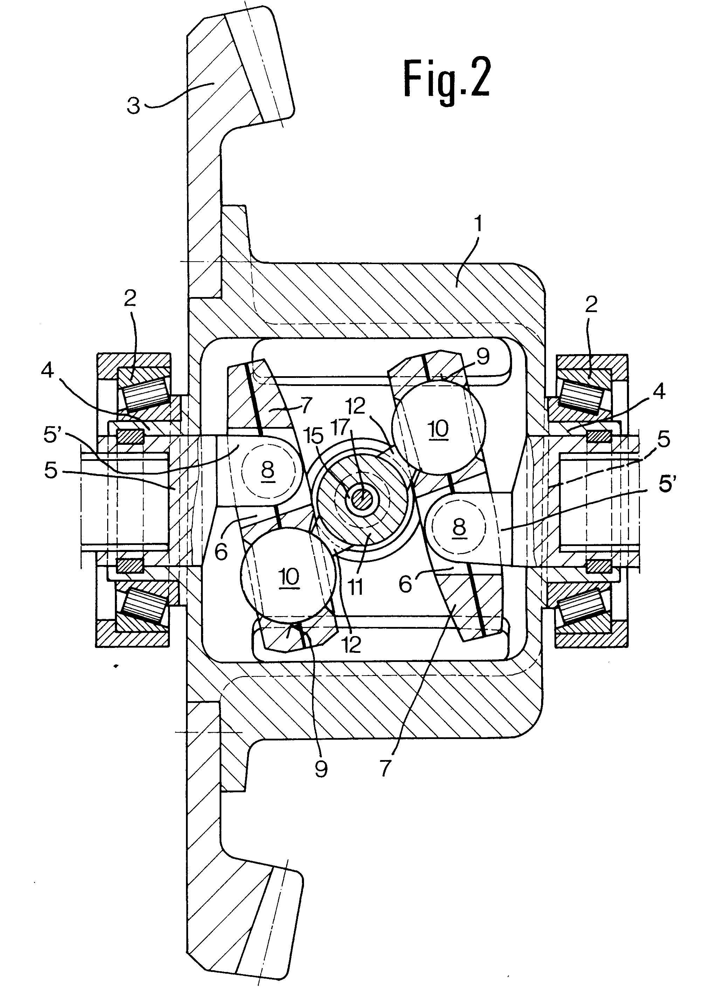

Der Vorsprung 5' greift in einen Durchbruch 6 einer Taumelscheibe 7 ein und ist innerhalb des Durchbruches 6 mittels eines seine Querbohrung durchdringenden Bolzens 8 gelenkig mit der Taumelscheibe 7 verbunden. In radialem Abstand von dem Durchbruch 6 weisen die beiden gleich ausgebildeten Taumelscheiben 7 je eine sphärische Lagerfläche 9 auf, in der eine Kugel 10 unter Bildung eines Kugelgelenkes gelagert ist. Damit die Kugel 10 in die sphärische Lagerfläche 9 eingelegt werden kann, sind die beiden Taumelscheiben 7 aus zwei Teilen zusammengefügt. Selbstverständlich können die Taumelscheiben 7 auch in anderer Weise als in den Fig. 1 und 2 dargestellt geteilt sein.

Die beiden Kugeln 10 bilden das freie Ende je eines in diametraler Richtung von einem zylindrischen Mittelteil 11 eines Kupplungsgliedes abstehenden Armes 12. Der zylindrische Mittelteil 11, die Arme 12, die Kugeln 10 und die beiden Taumelscheiben 7 bilden zusammen eine Kupplungseinrichtung, welche die Abtriebselemente 5 mit dem Gehäuse 1 derart verbindet, daß die Rotationsbewegung des Gehäuses 1 nur auf das eine Abtriebselement 5, nur auf das andere Abtriebselement 5 oder auf beide Abtriebselemente 5 übertragen werden kann, wobei im letztgenannten Falle die Drehzahlen der beiden Abtriebselemente 5 unterschiedlich sein können.

Das Mittelteil 11 ist mit zur Drehachse des Gehäuses 1 lotrechtem Verlauf seiner Längsmittelachse in der Mitte zwischen den beiden Abtriebselementen 5 und damit auch in der Mitte zwischen den beiden Taumelscheiben 7 um seine Längsachse drehbar und in Richtung seiner Längsachse verschiebbar im Gehäuse 1 gelagert. Das Mittelteil 11 kann deshalb eine kombinierte Dreh- und Translationsbewegung bezüglich des Gehäuses 1 ausführen, wie sie erforderlich ist, wenn die beiden Abtriebselemente 5 nicht synchron angetrieben werden. Dabei führen die Taumelscheiben 7 eine Taumelbewegung aus, da ihrer Drehbewegung eine Schwenkbewegung um den Bolzen 8 überlagert ist. Wird beispielsweise das Gehäuse 1 aus der in Fig. 1 dargestellten Lage, in welcher die beiden Abtriebselemente 5 eine gleiche Winkelstellung haben, um 90 gedreht und das in den Fig. 1 und 2 links dargestellte Abtriebselement 5 festgehalten, dann wird das in den Fig. 1 und 2 rechts dargestellte Abtriebselement 5 von der Kupplungseinrichtung um 180_{°} gedreht, wobei sich der Mittelteil 11 unter gleichzeitiger Drehung nach oben in Richtung gemäß Fig. 1 verschiebt. Bei dieser kombinierten Dreh- und Translationsbewegung des Mittelteils 11 werden die beiden Taumelscheiben 7 in die in Fig. 2 dargestellten Positionen geschwenkt.

Bei dem in den Fig. 1 und 2 dargestellten Ausführungsbeispiel sind die beiden Endabschnitte des Mittelteiles 11 als Kolben 11' bzw. 11" ausgebildet, die mittels Kolbenringen in je einem an das Gehäuse 1 angeformten Zylinder 13 bzw. 14 geführt sind. Den Mittelteil 11 einschließlich der beiden Kolben 11' sowie 11" durchdringt ein zentraler Kanal 15, über den die Arbeitsräume der beiden Zylinder 13 und 14 miteinander in Verbindung stehen. Die Zylinder 13 und 14 sowie der Kanal 15 sind mit einem Fluid gefüllt, bei dem es sich im Ausführungsbeispiel um ein bei Stoßdämpfern verwendetes Öl handelt. Da bei einem Unterschied in den Drehzahlen der beiden Abtriebselemente 5 die Kolben 11' und 11" zwangsläufig eine Hubbewegung ausführen, hat jeder Unterschied in der Drehzahl der Abtriebselemente 5 zur Folge, daß das Fluid 16 ständig aus dem einen oder anderen der beiden Zylinder 13 und 14 von dem zugeordneten Kolben verdrängt und durch den Kanal 15 hindurchgedrückt wird. Dadurch wird die Längsbewegung des Mittelteils 11 gehemmt, wobei die Größe der hemmenden Wirkung von der Drosselwirkung des Kanales 15 und der Hubgeschwindigkeit der Kolben 11' und 11" abhängt. Die auf den Mittelteil 11 ausgeübte hemmende Wirkung hat wie bei einem Sperrdifferential zur Folge, daß stets auf beide Abtriebselemente 5 ein Bruchteil des auf das Gehäuse 1 ausgeübten Drehmomentes übertragen wird, wobei die Größe dieses Bruchteils durch die Drosselwirkung des Kanales 15 festgelegt werden kann.

Im Ausführungsbeispiel ist zur Steuerung der Drosselwirkung des Kanales 15 durch diesen hindurch ein Stab 17 geführt, der im Bereich seiner Enden mit den beiden Zylindern 13 und 14 verbunden ist sowie zwei Kugeln 18 trägt. Dadurch, daß der Kanal 15 einen zylindrischen Mittelabschnitt und sich gegen das benachbarte freie Ende des Mittelteiles 11 hin konisch erweiternde Endabschnitte hat, vergrößert sich zunächst dank der bezüglich des Gehäuses 1 ortsfesten Kugeln 18 der freie Querschnitt des Kanales 15, wenn der Mittelteil 11 aus der in Fig. 1 dargestellten Endstellung sich in seine Mittelstellung bewegt, in welcher die beiden Kolben 11' und 11" je den halben Hub ausgeführt haben. Bei der weiteren Bewegung des Mittelteiles 11 in die andere Endstellung wird dann der wirksame freie Querschnitt des Kanales 15 wieder verkleinert. Diese Drosselwirkung kann man auch mit einer einzigen, auf halber Länge des Stabes 17 angeordneten Kugel erreichten, wenn der Kanal 15 sich von von seiner halben Länge aus gegen die beiden Enden hin verengt, da dann in der Mittelstellung des Mittelteils 11 die Kugel sich in der Zone des größten Kanaldurchmessers befindet. Da die Geschwindigkeit, mit der sich der Mittelteil 11 bei unterschiedlicher Drehzahl der Abtriebselemente 5 bewegt, von seiner Endstellung aus bis zur Mittelstellung hin zunimmt und dann wieder abnimmt, kann auf diese Weise in jeder Stellung der beiden Kolben 11' und 11" eine konstante Drosselwirkung und damit auch eine konstante Sperrwirkung erzielt werden.

Sofern der Stab 17 verstellbar ist, sind auch Ausführungsformen möglich, bei denen die Drosselwirkungen und damit die Sperrwirkung des Ausgleichsgetriebes verändert werden kann.

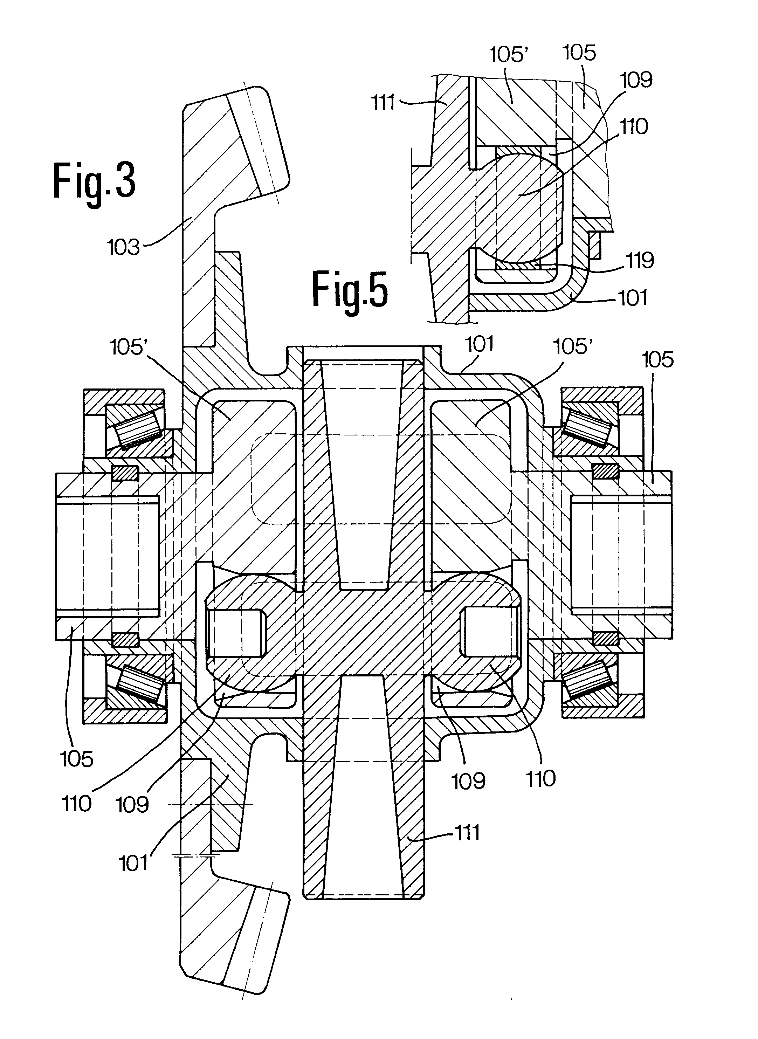

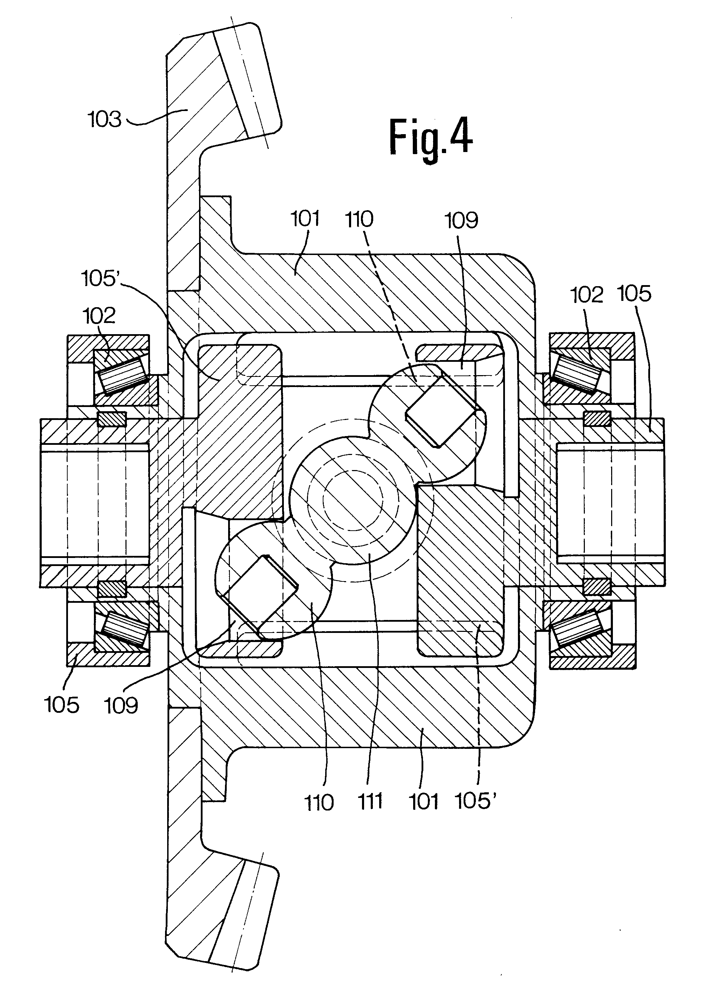

Das in den Fig. 3 bis 5 dargestellte zweite Ausführungsbeispiel unterscheidet sich von dem vorstehend beschriebenen ersten Ausführungsbeispiel nur teilweise. Deshalb sind im folgenden sich entsprechende Teile mit 100 größeren Bezugszahlen gekennzeichnet. Außerdem ist die Beschreibung im wesentlichen auf die Abweichungen beschränkt.

Die beiden Kugeln 110, welche auf halber Länge des zylindrischen Mittelteils 111 von diesem in diametralen Richtungen abstehen und unmittelbar an den Mittelteil 111 angeformt sind, greifen in je eine exzentrisch angeordnete Bohrung 109 einer Scheibe 105' ein, die im Inneren des Gehäuses 101 gleichachsig zum zugeordneten Abtriebselement 105 angeordnet und mit letzterem fest verbunden, im Ausführungsbeispiel einstückig ausgebildet ist. Die Bohrungen 109 der beiden spiegelbildlich gleich ausgebildeten Scheiben 105' bilden zusammen mit den beiden Kugeln 110 je ein Kugelgelenk, wobei allerdings die Kugeln 110 in den Bohrungen 109 nicht nur drehbar, sondern auch in Bohrungslängsrichtung verschiebbar sind. Diese Verschiebbarkeit der Kugeln 110 in den Bohrungen 109 ermöglicht es, statt der Taumelscheiben je ein fest mit dem zugeordneten Abtriebselement 105 verbundenes Element zu verwenden.

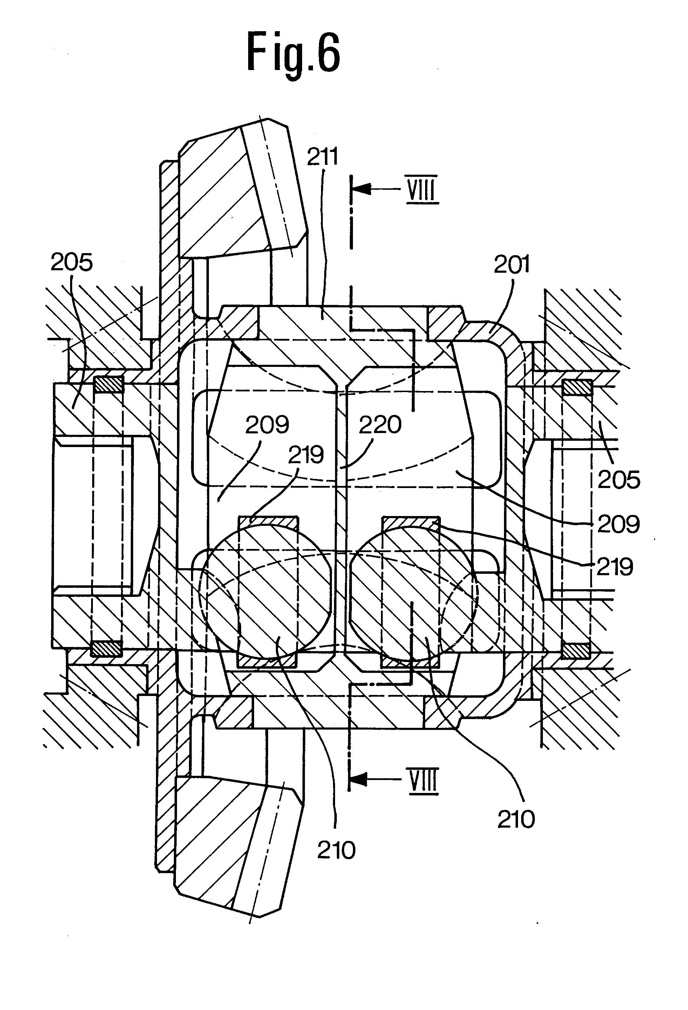

Wie Fig. 5 zeigt, brauchen die Kugeln 110 nicht unmittelbar an der Innenwand der zugeordneten Bohrung 109 anzuliegen. Man kann zwischen Kugel und Bohrungsinnenwandung auch einen ringförmigen Lagerkörper 119 vorsehen, der eine sphärische Innenfläche und eine zylindrische Außenfläche hat. Ein solcher Lagerkörper 119, der vorzugsweise aus einem Material mit guten Gleiteigenschaften besteht, vergrößert die Belastungszonen und reduziert dadurch erheblich die spezifische Druckbelastung sowohl der Kugeloberfläche als auch der Innenmantelfläche der Bohrung 109.

Selbstverständlich könnten bei dem Ausführungsbeispiel gemäß den Fig. 3 bis 5 die beiden Endabschnitte des Mittelteils 111 wie bei dem ersten Ausführungsbeispiel als Kolben ausgebildet sein, die je in einem fest mit dem Gehäuse 101 verbundenen Zylinder verschiebbar geführt sind. Es müßte dann der Mittelteil 111 noch in seinem Mittelabschnitt mit einer axialen Durchgangsbohrung versehen sein zur Bildung einer Drosselstrekke für das von den Kolben zu verdrängende Fluid.

Wegen der übrigen Einzelheiten des zweiten Ausführungsbeispiels wird auf die Ausführungen zu dem ersten Ausführungsbeispiel Bezug genommen.

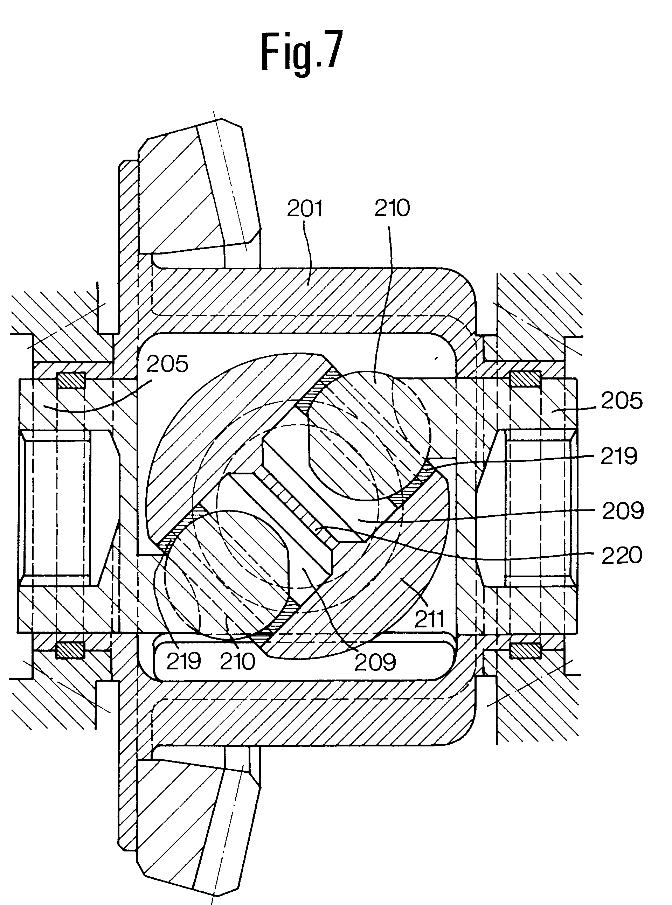

Auch das in den Fig. 6 bis 8 dargestellte Ausführungsbeispiel weist Übereinstimmungen mit den vorstehend beschriebenen Ausführungsbeispielen auf, weshalb auch von diesem Ausführungsbeispiel nur im wesentlichen die abweichenden Merkmale erläutert sind und die für sich entsprechende Teile verwendeten Bezugszahlen um 200 bzw. 100 größer gewählt sind als die Bezugszahlen des ersten bzw. zweiten Ausführungsbeispiels.

Die beiden Abtriebselemente 205, die gleichachsig im Gehäuse 201 konzentrisch zu dessen Drehachse gelagert sind, weisen an einem exzentrisch angeordneten und von der in das Gehäuse 201 ragenden Stirnfläche abstehenden Arm je eine Kugel 210 auf. Diese beiden Kugeln 210 greifen in je eine langgestreckte Ausnehmung 209 ein, welche einander gegenüberliegend in dem Kupplungsglied 211 vorgesehen sind. Dieses stabförmige Kupplungsglied 211 ist im Bereich seiner beiden Endabschnitte drehbar, aber axial unverschiebbar im Gehäuse 201 gelagert, und zwar zwischen den beiden Abtriebselementen 205, wobei seine Drehachse diejenigen der beiden Abtriebselemente 205 rechtwinklig schneidet. Die beiden quaderförmigen Ausnehmungen 209 sind durch eine Trennwand 220 voneinander getrennt und haben eine konstante Tiefe, die geringfügig größer ist als die größte Eindringtiefe der beiden Kugeln 210. Die beiden sich in Richtung der Drehachse des Kupplungsgliedes 211 erstreckenden seitlichen Begrenzungswände der Ausnehmung 209 sind eben und parallel zueinander sowie parallel zur Drehachse des Kupplungsgliedes 211 ausgebildet. Sie dienen als seitliche Führungsflächen für je einen Lagerring 219, der innen eine sphärische Lagerfläche für die aufzunehmende Kugel 210 und außen eine ebene, an den seitlichen Begrenzungswänden der Ausnehmung 209 anliegende Gleitfläche hat. Diese Lagerringe 219, welche die in ihnen gelagerte Kugel 210 umfassen, sind sowohl in Richtung der Drehachse des Kupplungsgliedes 211 als auch radial zu dieser in der sie aufnehmenden Aufnehmung 209 verschiebbar. Die Ausnehmung 209, der Lagerring 219 und die Kugel 210 bilden deshalb auch bei diesem Ausführungsbeispiel ein Kugelgelenk, das in radialer und axialer Richtung des Kupplungsgliedes 211 verschiebbar ist. Infolge der axialen Verschiebbarkeit des Kugelgelenkes kann auf eine axiale Verschiebbarkeit des Kupplungsgliedes 211 relativ zum Gehäuse 201 verzichtet werden. Weisen die beiden Abtriebselemente 205 unterschiedliche Drehzahlen auf, dann führt aus diesem Grunde das Kupplungsglied 211 nur eine Drehbewegung aus. Die außerdem erforderliche Verschiebbarkeit der Kugelgelenke in Richtung der Drehachse des Kupplungsgliedes 211 ist durch die Verschiebbarkeit des Lagerringes 219 in der Ausnehmung 209 gewährleistet.

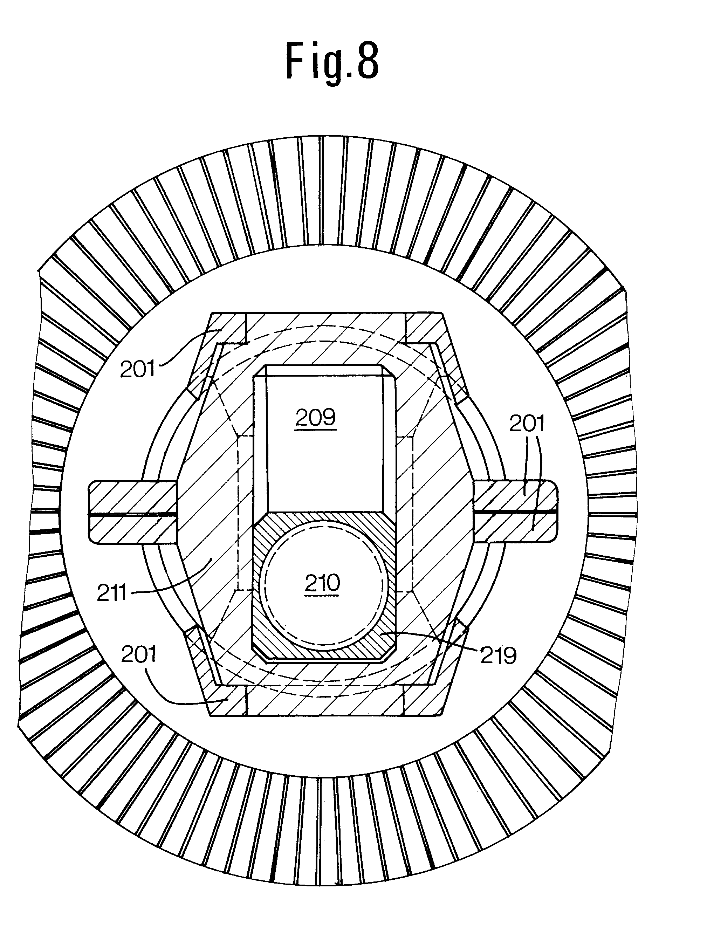

Wie Fig. 8 zeigt, ist das Gehäuse 201 wie bei den übrigen Ausführungsbeispielen aus zwei Hälften zusammengesetzt. Ferner zeigt Fig. 8, daß der Lagering 219 die Kugel 210 umfaßt und an den seitlichen Begrenzungswänden der Ausnehmung 209 geführt ist. Wegen weiterer Einzelheiten wird auf die Ausführungen zu dem ersten und zweiten Ausführungsbeispiel Bezug genommen.

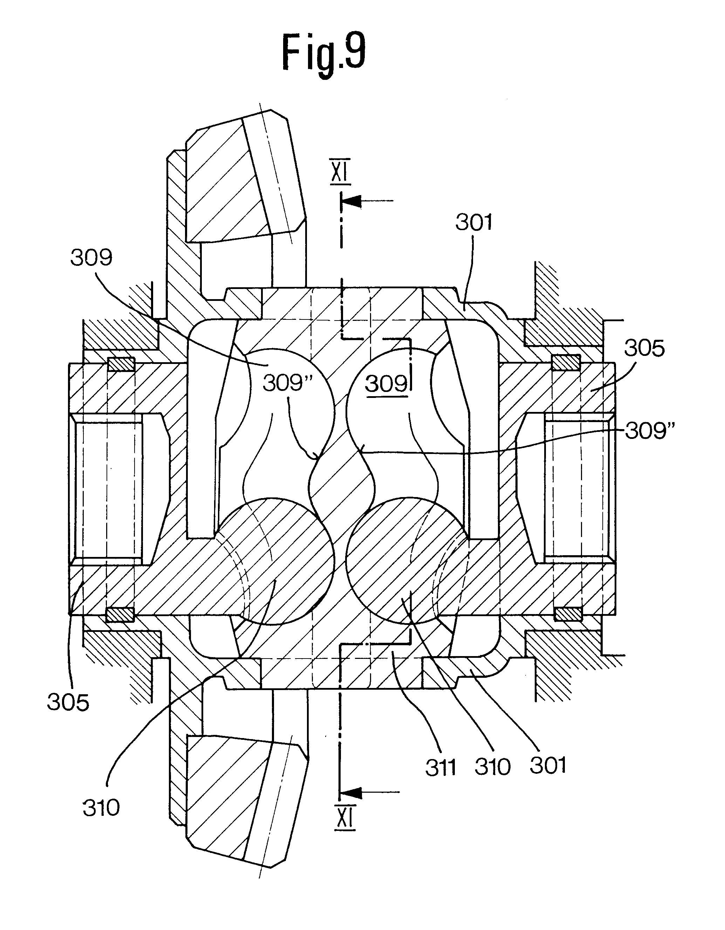

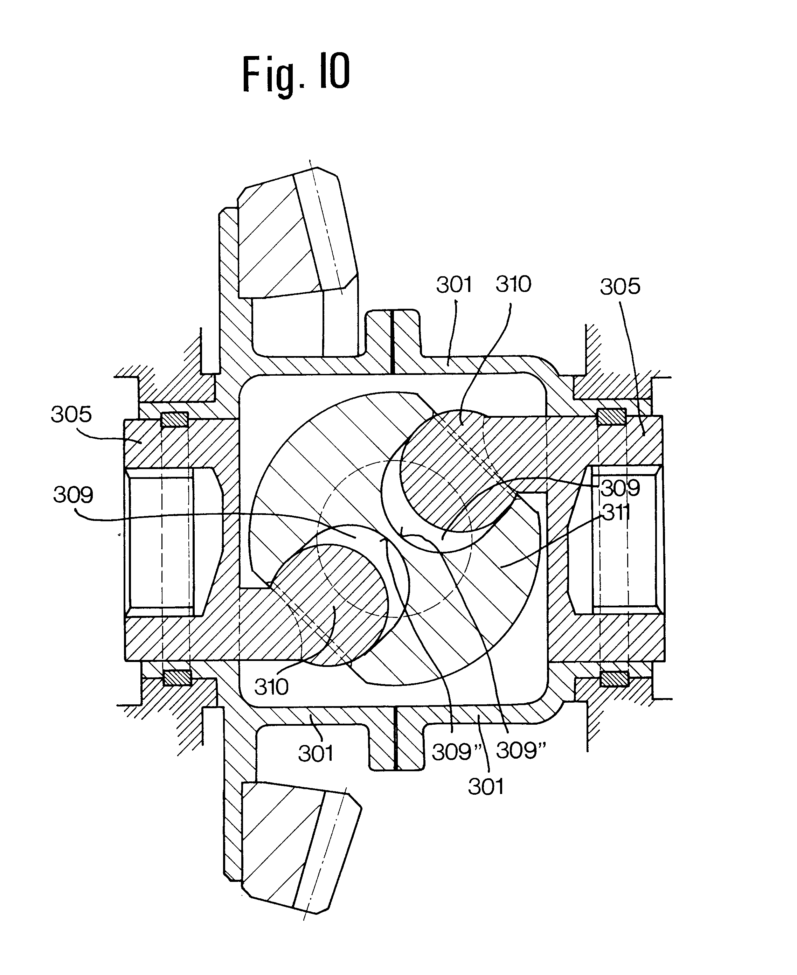

Das in den Fig. 9 bis 11 dargestellte dargestellte vierte Ausführungsbeispiel unterscheidet sich von dem dritten Ausführungsbeispiel nur durch eine andere Form der beiden einander gegenüberliegend im Kupplungsglied 311 vorgesehenen Ausnehmungen 309. Deshalb ist das vierte Ausführungsbeispiel nur hinsichtlich dieser Abweichung beschrieben. Außerdem sind sich entsprechende Teile mit Bezugszahlen gekennzeichnet, welche gegenüber denjenigen des dritten Ausführungsbeispiels um 100 größer sind.

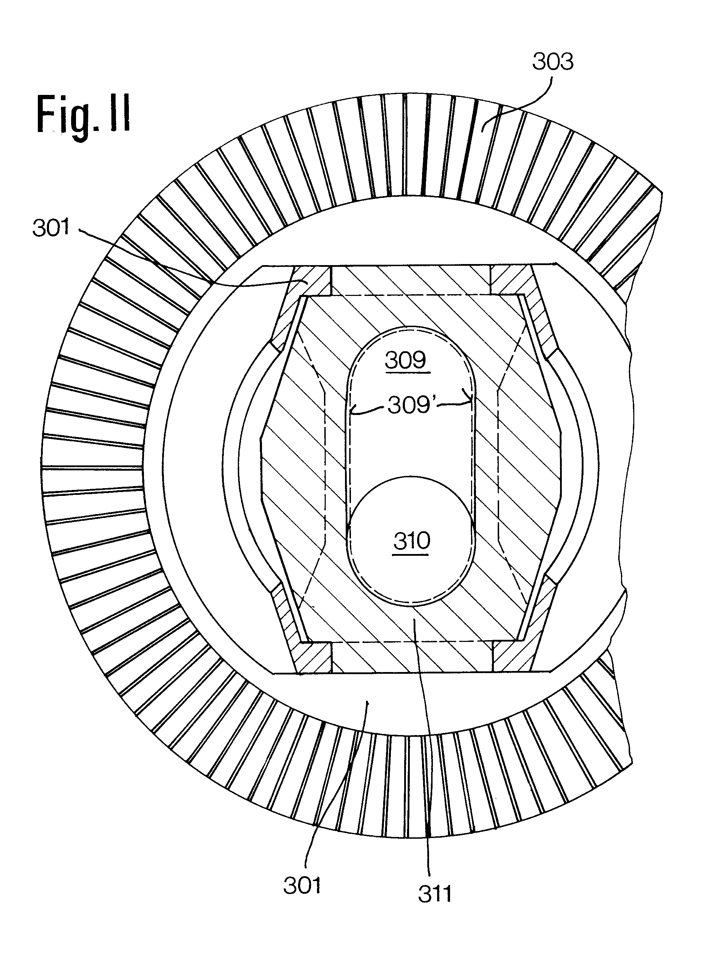

Die beiden Ausnehmungen 309, die sich in Richtung der Drehachse des Kupplungsgliedes 311 erstrecken, sind in ihrer Breite an den Durchmesser der Kugeln 310 angepaßt, die exzentrisch an das eine bzw. andere Abtriebselement 305 angeformt sind. Wie Fig. 11 zeigt, sind deshalb die seitlichen Begrenzungswände 309' der Ausnehmungen 309 ebene Flächen. Hingegen ist der Grund 309" der beiden Ausnehmungen 309 gekrümmt, und zwar, wie Fig. 9 zeigt, derart, daß die Eindringtiefe der Kugel 311 in die Ausnehmung 309 durch deren Grund 309" bestimmt wird. Da die Eindringtiefe in den beiden Endbereichen der Ausnehmung 309 am größten sein muß, steigt der Grund 309" von hier aus bis zur halben Länge der Ausnehmung 309 an, wobei seine konkave Krümmung in den beiden Endabschnitten in eine konvexe Krümmung im Mittelabschnitt übergeht. Sofern die Drehzahl der beiden Abtriebselemente 305 nicht gleich ist, führt das Kupplungsglied 211 eine Drehbewegung um eine Drehachse aus. Gleichzeitig verschieben sich die Kugeln 310 in der zugeordneten Ausnehmung 309 sowohl in Achsrichtung des Kupplungsgliedes 311 als auch in dessen radialer Richtung, was bedeutet, daß auch bei diesem Ausführungsbeispiel die beiden Kugelgelenke wandern.

Wegen weiterer Einzelheiten wird auf die vorausgehenden Ausführungen Bezug genommen.

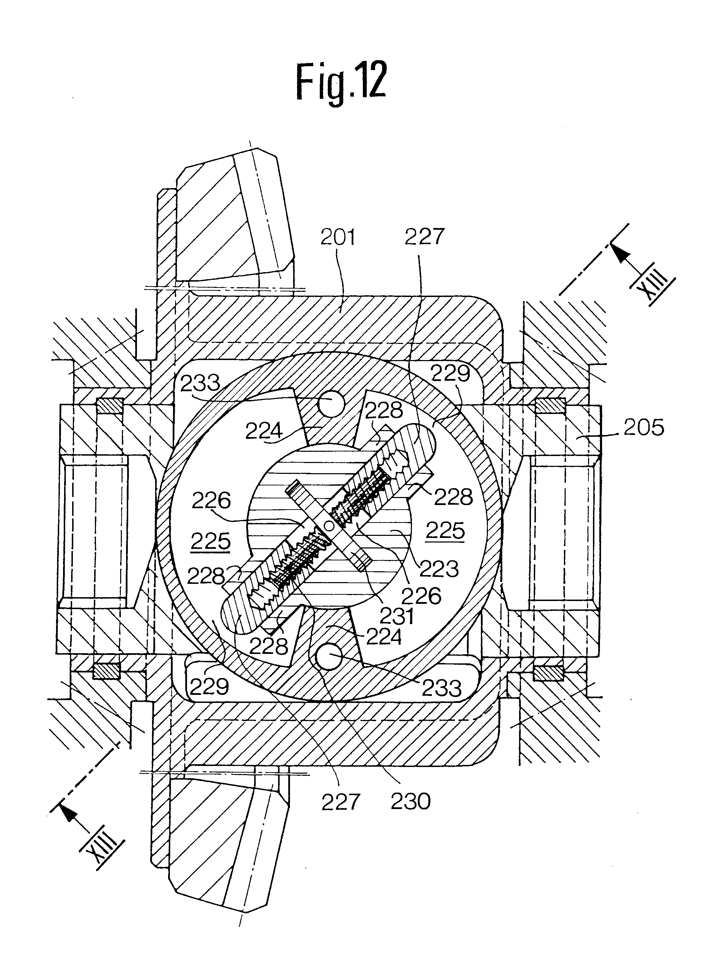

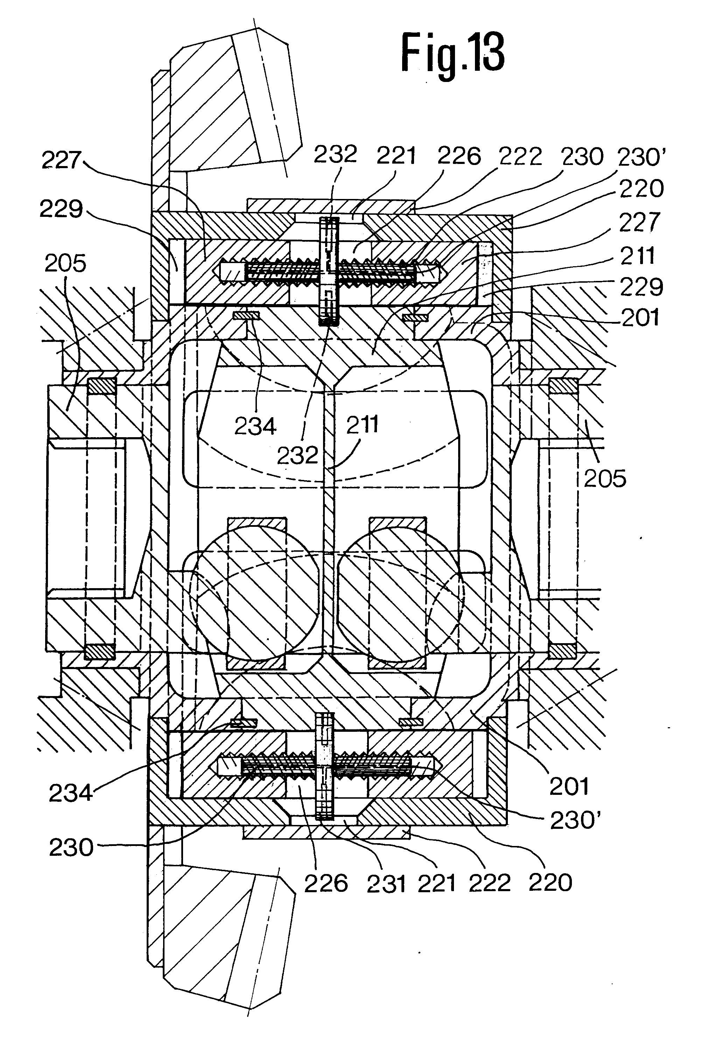

Bei dem in den Fig. 12 und 13 dargestellten Ausführungsbeispiel handelt es sich um eine Abwandlung des in den Fig. 6 bis 8 dargestellten dritten Ausführungsbeispiels. Die Abwandlung betrifft eine Ergänzung durch eine hydraulische Bremseinrichtung, durch welche das Ausgleichsgetriebe die Eigenschaften eines Sperrdifferentials erhält. Wegen der bis auf die Bremseinrichtung übereinstimmenden Ausbildung mit dem Ausführungsbeispiel gemäß den Fig. 6 bis 8 sind sich entsprechende Teile mit gleichen Bezugszahlen gekennzeichnet. Außerdem ist im folgenden nur die Bremseinrichtung im einzelnen erläutert.

Wie insbesondere Fig. 13 zeigt, sind die beiden parallel zur Teilungsebene des zweiteiligen Gehäuses 201 liegenden Wände des Gehäuses 201, welche die Lagerbohrungen für das Kupplungsglied 211 enthalten, auf ihrer Außenseite mit je einem zu der Lagerbohrung konzentrischen Sitz versehen. Dieser Sitz trägt fluiddicht das freie Ende eines Zylinders 220, der in seinem Boden mit einer zentralen Öffnung 221 versehen ist, die von außen her mittels eines Deckels 222 fluiddicht verschließbar ist.

Die beiden Lagerzapfen des Kupplungsgliedes 211, welche in den beiden Lagerbohrungen des Gehäuses 201 drehbar gelagert sind, sind in den einen bzw. anderen Zylinder 220 hinein bis nahe zu diesem Boden verlängert. Diese Verlängerung ist mit 223 gekennzeichnet. Bis zu ihrer Mantelfläche erstrecken sich zwei diametral angeordnete, radiale Vorsprünge 224 des Zylinders 220, durch welche der Innenraum des Zylinders 220 in zwei Kammern 225 unterteilt wird, welche je die Form eines Ringsegmentes haben.

Wie insbesondere Fig. 12 erkennen läßt sind die Verlängerungen 223 mit einem sie radial durchdringenden Schlitz 226 versehen.

In diesem Schlitz 226 sind zwei gleich ausgebildete Absperrschieber 227 symmetrisch zur Drehachse der Verlängerung 223 angeordnet. Diese beiden Absperrschieber 227, welche in die eine bzw. andere Kammer 225 ragen, liegen abdichtend sowohl am Boden des Zylinders 220 als auch an der Außenseite der den Zylinder 220 tragenden Gehäusewand und den Flanken des Schlitzes 226 an. Das in die Kammer 225 ragende Ende der Absperrschieber 227 ist im Ausführungsbeispiel halbzylindrisch gekrümmt, wobei die Krümmungsachse parallel zur Drehachse der Verlängerung 223 liegt. Zur besseren seitlichen Führung der Absperrschieber 227 sind an die Verlängerung 223 für jeden Absperrschieber 227 zwei Führungswangen 228 angeformt, welche den Schlitz 226 radial nach außen verlängern.

Da die beiden Kammern 225 und die übrigen Räume der Zylinder bis zum Deckel 222 vollständig mit einem Fluid, beispielsweise einem Hydrauliköl, gefüllt sind und das Kupplungsglied 211 eine oszillierende Bewegung um seine Längsachse ausführt, wobei der Drehwinkel kleiner als 180 ist, wird, wenn infolge einer unterschiedlichen Drehgeschwindigkeit der beiden Abtriebselemente 205 das Kupplungsglied 211 die erwähnte oszillierende Drehbewegung ausführt, Fluid vom einen Teil jeder Kammer 225 durch den Spalt 229 zwischen der Innenwand des Zylinders 220 und dem Absperrschieber 227 hindurch in den anderen Teil gedrückt. Die hierdurch erreichte Drosselwirkung hat zur Folge, daß auf das sich schneller drehende Abtriebselement 205 eine Bremswirkung ausgeübt wird. Diese Bremswirkung ist um so größer, je enger der Spalt 229 ist.

Um die Weite des Spaltes 229 einstellen und verändern zu können, sind die beiden Absperrschieber 227 mit einer radial verlaufenden Sackloch-Gewindebohrung versehen. In diesem miteinander fluchtenden Gewindebohrungen, von denen die eine als Rechtsgewinde und die andere als Linksgewinde ausgeführt ist, greift eine Gewindespindel 230 ein, deren eingreifende Abschnitte mit entsprechenden Gewinden versehen sind. Auf halber Länge trägt die Gewindespindel 230 eine fest mit ihr verbundene Antriebsscheibe 231, die drehbar, aber axial unverschiebbar in einer innerhalb der Verlängerung 223 liegenden und lotrecht zum Schlitz 226 verlaufenden Schlitz angeordnet ist. Wie Fig. 13 zeigt, ragt die Antriebsscheibe 231 über das freie Ende der Verlängerung 223 hinaus und in die zentrale Öffnung 221 des Zylinderbodens hinein. Außerdem ist die Antriebsscheibe 231 mit radialen Bohrungen 232 versehen, in welche zum Drehen der Antriebsscheibe 231 ein Stift eingesteckt werden kann, wenn der Deckel 222 gelöst ist. Je nach Drehrichtung der Antriebsscheibe 231 werden die Spalte 229 vergrößert oder verkleinert. Eine zentrale Durchgangsbohrung 230' der Gewindespindel 230 steht über eine Verbindungsbohrung mit einer der radialen Bohrungen in Verbindung.

Da die Rotationsgeschwindigkeit des Kupplungsgliedes 211 bei der oszillierenden Bewegung zu Beginn und am Ende des Drehbereiches am kleinsten und in der Mitte des Drehbereiches am größten ist, ist die Innenwand des Zylinders 220 so ausgebildet, daß die Weite des Spaltes 229 von der Mitte des Drehbereiches aus zu den beiden Enden hin abnimmt, wodurch die Drosselwirkung zunimmt. Durch diese Maßnahme wird das Bremsmoment vergleichmäßigt, das auf das sich schneller drehende Abtriebselement 205 einwirkt.

Je eine Durchgangsbohrung 233 in den beiden Vorsprüngen 224 des Zylinders 220, welche mit je einer Durchgangsbohrung im Boden des Zylinders 220 fluchten, sind auf je eine Gewindebohrung im Gehäuse 201 ausgerichtet. Der Zylinder 220 kann deshalb mittels Schrauben, welche die Durchgangsbohrungen 233 durchdringen, mit dem Gehäuse 201 verbunden werden. Um zu verhindern, daß Fluid aus den Kammern 225 in das Innere des Gehäuses 201 gelangt, sind die beiden Lagerbohrungen für das Kupplungsglied 211 mit je einer Ringdichtung 234 versehen.

Selbstverständlich wäre die Bremsfunktion auch gewährleistet, wenn nur ein einziger Zylinder 220 vorgesehen wäre. Im Hinblick auf den Massenausgleich und die erforderliche Baugröße ist es jedoch vorteilhafter, wie bei dem beschriebenen Ausführungsbeispiel zwei Zylinder 220 mit den mit ihnen zusammenwirkenden Teilen vorzusehen.

In gleicher Weise wie das Ausführungsbeispiel gemäß den Fig. 6 bis 8 können auch alle anderen Ausführungsbeispiele mit einer oszillierenden Drehbewegung des Kupplungsgliedes, also insbesondere das Ausführungsbeispiel gemäß den Fig. 9 bis 11, mit der beschriebenen Bremseinrichtung ausgerüstet sein.

## Patentansprüche

1. Ausgleichsgetriebe mit einem drehbar gelagert und mittels eines Antriebselementes in Drehung versetzbaren Lagerkörpers, zwei im Lagerkörper zu dessen Drehachse gleichachsig drehbar gelagerten Abtriebselementen sowie einer relativ zum Lagerkörper und den Abtriebselementen beweglichen Kupplungseinrichtung, welche die Abtriebselemente mit dem Lagerkörper in einer unterschiedliche Drehzahlen sowohl zwischen den Abtriebselementen und dem Lagerkörper als auch zwischen den Abtriebselementen zulassenden Weise verbindet,
dadurch gekennzeichnet, daß
a) weder die Kupplungseinrichtung (7 bis 12; 110, 111; 211; 311) noch die Abtriebselemente (5; 105; 205; 305) einen Zahnkranz aufweisen,
b) die beiden Abtriebselemente (5; 105; 205; 305) mit je einem Verbindungsglied (5'; 105'; 210; 310) mit exzentrisch zur Drehachse des Abtriebselementes (5; 105; 205; 305) liegender Verbindungsstelle für die Verbindung mit der Kupplungseinrichtung (7 bis 12; 110, 111; 211; 311) versehen sind und
c) die Kupplungseinrichtung (7 bis 12; 110, 111; 211; 311) ein Kupplungsglied (10, 11, 12; 110, 111; 211; 311) aufweist, das zwischen den beiden Abtriebselementen (5; 105; 205; 305) um eine zur Drehachse des Lagerkörpers (1; 101; 201; 301) lotrecht verlaufende Achse drehbar im Lagerkörper gelagert ist.

2. Ausgleichsgetriebe nach Anspruch 1, dadurch gekennzeichnet, daß das Kupplungsglied (10, 11, 12; 110, 111) einen im Lagerkörper (1; 101) längsverschiebbaren zylindrischen Mittelteil (11; 111) aufweist, von dem in entgegengesetzte radiale Richtungen zwei Arme (12) abstehen, deren freies Ende die Form einer wenigstens unvollständigen Kugel (10; 110) hat, und daß jede der beiden Kugeln (10) unter Bildung je eines Kugelgelenkes in einem sphärischen Lagerbett einer ersten bzw. zweiten Taumelscheibe (7) der Kupplungseinrichtung (7 bis 12) gelagert ist und die Verbindungskörper (7) im Abstand vom Zentrum des Lagerbettes mit dem zugeordneten Verbindungsglied (5') in dessen exzentrisch angeordneter Verbindungsstelle um eine zu dessen Drehachse rechtwinklig verlaufende Gelenkachse schwenkbar verbunden sind.

3. Ausgleichsgetriebe nach Anspruch 1, dadurch gekennzeichnet, daß die exzentrisch angeordnete Verbindungsstelle der beiden Verbindungsglieder (105') durch je eine zylindrische, parallel zur Drehachse des Verbindungsgliedes(105') verlaufende Lagerfläche gebildet ist, in der eine Kugel (110) drehbar und in Richtung der Zylinderachse verschiebbar gelagert ist, und daß zwischen der Kugel (110) und der zylindrischen Lagerfläche (109) ein Lagerring (119) mit sphärischer Innenfläche und zylindrischer Außenfläche angeordnet ist.

4. Ausgleichsgetriebe nach Anspruch 1, dadurch gekennzeichnet, daß die exzentrisch angeordneten Verbindungsstellen der Abtriebselemente (205; 305) durch je eine wenigstens unvollständige Kugel (210; 310) gebildet sind und das Kupplungsglied (211; 311) gegen eine Verschiebung in Richtung seiner Drehachse relativ zum Lagerkörper (201; 301) gesichert ist sowie zwei diametral bezüglich der Drehachse angeordnete Ausnehmungen (209; 309) aufweist, mit denen die eine bzw. andere Kugel (210; 310) in einem ein in Richtung der Drehachse des Kupplungsgliedes (211; 311) und der Abtriebselemente (205; 305) verschiebbares Kugelgelenk bildenden Eingriff steht.

5. Ausgleichsgetriebe nach Anspruch 4, dadurch gekennzeichnet, daß die Ausnehmungen (209; 309) ebene, zueinander parallele seitliche Führungsflächen aufweisen.

6. Ausgleichsgetriebe nach Anspruch 4 oder 5, dadurch gekennzeichnet, daß zwischen der Kugel (210) und den durch die Ausnehmung (209) gebildeten Führungsflächen ein Lagerring (219) mit sphärischer Innenfläche und ebenen Außenflächen angeordnet ist.

7. Ausgleichsgetriebe nach Anspruch 5 oder 6, dadurch gekennzeichnet, daß die Tiefe der Ausnehmungen (209) auf ihrer gesamten in Richtung der Drehachse des Kupplungsgliedes (211) gemessenen Länge zumindest gleich der maximalen Eindringtiefe der Kugel (210) gewählt ist.

8. Ausgleichsgetriebe nach Anspruch 5, dadurch gekennzeichnet, daß der Grund (309") der Ausnehmungen (309) eine gekrümmte, die Eindringtiefe der Kugel (310) bestimmende Form hat.

9. Ausgleichsgetriebe nach einem der Ansprüche 1 bis 8, dadurch gekennzeichnet, daß der Lagerkörper (1; 101; 201; 301) als ein in einer Ebene, zu der die Drehachse des Kupplungsgliedes (7 bis 12, 110, 111; 211; 311) lotrecht verläuft, geteiltes Gehäuse ausgebildet ist, für dessen drehbare Lagerung ein Getriebegehäuse vorgesehen ist.

10. Ausgleichsgetriebe nach einem der Ansprüche 1 bis 3, dadurch gekennzeichnet, daß
a) die beiden Endabschnitte des längsverschiebbar gelagerten Kupplungsgliedes (10, 11, 12) als Kolben (11', 11") ausgebildet sind, denen je ein relativ zum Lagerkörper
(1) unbeweglicher Zylinder (13, 14) zugeordnet ist,
b) der Mittelteil (11) des Kupplungsgliedes (10, 11, 12) mit wenigstens einem ihn in axialer Richtung durchdringenden Kanal (15) versehen ist, über den die Innenräume der beiden Zylinder (13, 14) miteinander in Verbindung stehen, und
c) der Zylinder (13, 14) und der durchgehende Kanal (15) des Mittelteils (11) wenigstens unvollständig mit einem Fluid gefüllt sind.

11. Ausgleichsgetriebe nach Anspruch 10, dadurch gekennzeichnet, daß im Kanal (15) des Mittelteils (11) ein mit wenigstens einem der Zylinder (13, 14) verbundener Steuerkörper (17, 18) angeordnet ist, der den freien Durchtrittsquerschnitt des Kanals (15) für das Fluid (16) beeinflußt.

12. Ausgleichsgetriebe nach Anspruch 11, dadurch gekennzeichnet, daß der Kanal (15) des Mittelteils (11) zusammen mit dem Steuerkörper (17, 18) eine Drosselstrecke für das Fluid (16) mit von der axialen Position des Mittelteils (11) abhängiger Drosselwirkung bilden.

13. Ausgleichsgetriebe nach Anspruch 12, dadurch gekennzeichnet, daß der freie Durchtrittsquerschnitt des Kanals (15) in der Mittelstellung des Mittelteils (11) ein Maximum hat.

14. Ausgleichsgetriebe nach einem der Ansprüche 1 bis 9, gekennzeichnet durch wenigstens einen sich zusammen mit dem Kupplungsglied (211) um dessen Drehachse drehender Drehkolben (223, 227), der in einem mit dem Lagerkörper (201) fest verbundenen Zylinder (220) angeordnet ist und bei einer Drehbewegung des Kupplungsgliedes (211) ein Fluid durch eine Drosselstelle (229) von einer Kammer in eine andere Kammer drückt.

15. Ausgleichsgetriebe nach Anspruch 14, dadurch gekennzeichnet, daß der Drehkolben (223, 227) einen das Kupplungsglied (211) in axialer Richtung verlängernden Teil (223) und wenigstens einen von diesem in radialer Richtung abstehenden Arm (227) aufweist, welcher im Abstand von der Innenwand des Zylinders (220) unter Bildung eines Drosselspaltes (229) endet.

16. Ausgleichsgetriebe nach Anspruch 15, dadurch gekennzeichnet, daß der Drosselspalt (229) eine von der Mitte des Drehbereiches des Armes (227) zu den beiden Enden hin abnehmende Weite hat.

17. Ausgleichsgetriebe nach Anspruch 15 oder 16, dadurch gekennzeichnet, daß der Arm (227) in radialer Richtung verstellbar mit dem das Kupplungsglied (211) verlängernden Teil (223) verbunden ist.

18. Ausgleichsgetriebe nach einem der Ansprüche 14 bis 17, dadurch gekennzeichnet, daß der Zylinder (220) in zwei Kammern (225) unterteilt ist und in jeder der beiden Kammern (225) ein mit der Zylinderinnenwand eine der Drosselstellen bildender Teil (227) des Drehkolbens (223, 227) angeordnet ist.

19. Ausgleichsgetriebe nach einem der Ansprüche 14 bis 18, dadurch gekennzeichnet, daß der Zylinder (220) außen an den Lagerkörper (201) konzentrisch zur Drehachse des Kupplungsgliedes (211) angesetzt ist.
